Europäisches Patentamt

European Patent Office

Office européen des brevets

(19)

(11) **EP 0 768 622 A2**

(12) **EUROPEAN PATENT APPLICATION**

(43) Date of publication:
**16.04.1997 Bulletin 1997/16**

(51) Int. Cl.$^6$: **G06T 7/00**, G06T 7/60,
G02B 21/00

(21) Application number: **96116103.1**

(22) Date of filing: **08.10.1996**

(84) Designated Contracting States:
**DE FR GB**

(30) Priority: **12.10.1995 JP 264119/95**

(71) Applicant: **Dainippon Screen Mfg. Co., Ltd.**
**Kamikyo-ku Kyoto 602 (JP)**

(72) Inventors:
• **Horie, Masahiro,**
**Dainippon Screen MFG. Co., Ltd.**
**Horikawa-dori, Kamikyo-ku, Kyoto (JP)**

• **Nakai, Kazuhiro,**
**Dainippon Screen MFG. Co., Ltd.**
**Horikawa-dori, Kamikyo-ku, Kyoto (JP)**

(74) Representative: **Goddar, Heinz J., Dr. et al**
**FORRESTER & BOEHMERT**
**Franz-Joseph-Strasse 38**
**80801 München (DE)**

(54) **Method and apparatus for detecting and displaying a three-dimensional shape**

(57)     With three-dimensional detecting method and a three-dimensional detecting apparatus, it is possible to accurately detect a surface shape of a sample. While moving a sample, confocal images $F_j$ (where $j = 1, 2, ..., n$) are taken at a plurality of heights which are different from each other in the direction of height. Based on the confocal images $F_j$, peak height positions $P(x, y, L)$ at which the quantity of light becomes local maximum in the direction of height are found for each pixel $(x, y)$. Further, for each pixel $(x, y)$, a peak height position $P(x, y, 0)$ which is highest among the peak height positions $P(x, y, L)$ is selected as surface information regarding the sample corresponding to the pixel $(x, y)$.

FIG. 1

EP 0 768 622 A2

## Description

BACKGROUND OF THE INVENTION

Field of the Invention

The present invention relates to a three-dimensional detecting method and a three-dimensional detecting apparatus in which confocal images at a horizontal plane consisting of a plurality of pixels are taken at a plurality of heights which are different from each other in the direction of the height of a sample object and surface information of the sample object is obtained based on the plurality of the confocal images. The present invention also relates to a three-dimensional displaying method of displaying a surface shape or the like of the sample object based on the surface information which is obtained using the three-dimensional detecting method.

Description of the Related Art

In recent years, in technical fields related to production of a semiconductor device and a liquid crystal device, as a device has become denser and manufacturing steps have become more complex, the need for observing and detecting a three-dimensional structure of a surface of a substrate has been mounting. This is because three-dimensional observation of a device makes it easier to grasp manufacturing steps and makes it possible to identify the type of a defect which is created in the device and a cause of the defect. Meanwhile, in technical fields related to biotechnology as well, as an interest on a three-dimensional structure of a cell and a molecule has increased, the need for observing and detecting three-dimensional structures of a cell and a molecule has been mounting.

To satisfy these needs, a confocal microscope utilizing the principles of confocal point has been proposed. For instance, a conventioanl confocal microscope is constructed to take confocal images at a horizontal plane at a plurality of heights which are different from each other in the direction of the height of a sample object while moving the sample object in the direction of the height. An optical axis position, i.e., a height position in the direction of the height, at which the quantity of light is maximum is calculated for each pixel and used as surface information which expresses a surface of the sample object.

Further, while detecting the sample object three-dimensionally, a surface shape of the sample object is displayed in a display part such as a CRT based on the surface information which is obtained from detection so that an operator can observe the shape.

While the conventional three-dimensional detection specifies the surface of the sample object based on a criteria that the height position at which the quantity of light is maximum is the surface of the sample object as described above, such a criteria cannot be applied on some samples. For example, with a sample object in which a plurality of films are formed on a surface of a substrate, typically a semiconductor device, plurality of light quantity peaks appear. One of the light quantity peaks having the maximum light quantity does not necessarily correspond to the surface. Rather, the peaks differ depending on the transparencies of the films and interference among the films. Hence, a detection result is not accurate when the light quantity at a light quantity peak which corresponds to the true surface of the sample object is smaller than the light quantities at other light quantity peaks. Thus, with three-dimensional detection of a sample object by means of the conventional confocal microscope, a detection result varies depending on the types of films on a substrate, film thicknesses, etc., and therefore, it is impossible to accurately detect the surface of the sample object.

Further, since the conventional three-dimensional detecting method cannot accurately detect the surface of the sample object as described above, it is impossible to accurately display the surface shape of the sample object.

Still further, while techniques for detecting a surface shape of a sample object have been disclosed conventionally, techniques for detecting and displaying an internal structure, and especially a cross-sectional shape of the sample object have not been proposed. On the other hand, a defect and a layer structure within the sample object can be easily known if information regarding a cross-sectional shape of the sample object, i.e., cross-sectional information can be obtained and displayed, which is useful.

SUMMARY OF THE INVENTION

The present invention is directed to an apparatus for detecting a three-dimensional shape of a sample.

According to the present invention, the apparatus comprises: a) pickup means for taking respective confocal images at different heights from the sample to obtain light-intensity levels in the respective confocal images for each pixel; b) peak position detecting means for detecting respective peak positions where the light-intensity level of each pixel is local maximum among the different heights for each pixel; c) selecting means for selecting one of the peak positions for each pixel to obtain a spacial distribution of characteristic heights; and d) determining means for determining a three dimensional shape of the sample from the spacial distribution of characteristic heights.

In an aspect of the present invention, the peak position detecting means comprises b-1) comparing means for comparing the light-intensity level of each pixel with respective light-intensity levels of corresponding pixels in nearest up-side height and down-side height to determine a local maximum light-intensity level of each pixel; and b-2) defining means for defining each of the peak positions by the local maximum light-intensity level of each pixel.

In another aspect of the present invention, the selecting means comprises c-1) means for selecting highest one of the peak positions for each pixel to obtain a first spacial distribution of characteristic heights; and d-1) means for determining a surface-shape of the sample from first spacial distribution of characteristic heights.

Since with respect to each pixel, the highest one of the peak positions is selected as surface information regarding the sample which corresponding to the pixel, even when a peak position which is related to an internal structure of the sample appears, it is possible to accurately detect a surface shape of the sample.

In another aspect of the present invention, the selecting means comprises c-2) means for selecting one of the peak positions except highest for each pixel to obtain a second spacial distribution of characteristic heights; and d-2) means for determining a cross sectional form of the sample from second spacial distribution of characteristic heights.

Since one of the peak positions except for the surface information is determined as internal information regarding the sample, it is possible to accurately obtain internal information.

The present invention is also directed to a method of detecting a three-dimensional shape of a sample.

Accordingly, a first object of the present invention is to provide for a three-dimensional detecting method and a three-dimensional detecting apparatus with which it is possible to accurately detect a surface shape of a sample object.

A second object of the present invention is to provide for a three-dimensional displaying method for accurately displaying a surface shape of a sample object.

A third object of the present invention is to provide for a three-dimensional displaying method for accurately displaying a cross-sectional shape of a sample object.

These and other objects, features, aspects and advantages of the present invention will become more apparent from the following detailed description of the present invention when taken in conjunction with the accompanying drawings.

BRIEF DESCRIPTION OF THE DRAWINGS

Fig. 1 is a view of a three-dimensional detecting apparatus according to a preferred embodiment of the present invention;

Figs. 2 and 3 are flow charts showing an operation of the three-dimensional detecting apparatus of Fig. 1;

Figs. 4A to 4D are schematic diagrams showing the operation of the three-dimensional detecting apparatus of Fig. 1;

Fig. 5 is a conceptual view showing a relationship between a height position D(j) and a corresponding confocal image Fj;

Fig. 6 is a conceptual view showing a relationship between a height position D(j) and a peak height position P(x, y, L);

Fig. 7 is a flow chart showing displaying of a surface shape of a sample object;

Fig. 8 is a view of an example of a surface shape of a sample object (mid-tone image) which is displayed in a display monitor shown in Fig. 1;

Fig. 9 is a flow chart showing displaying of a cross-sectional shape of a sample object;

Fig. 10 is a view of an example of a cross-sectional shape of a sample which is displayed in the display monitor shown in Fig. 1;

Fig. 11 is a flow chart showing an operation of a three-dimensional detecting apparatus according to another preferred embodiment of the present invention; and

Fig. 12 is a flow chart showing a local maximum peak detection process.

DESCRIPTION OF THE PREFERRED EMBODIMENTS

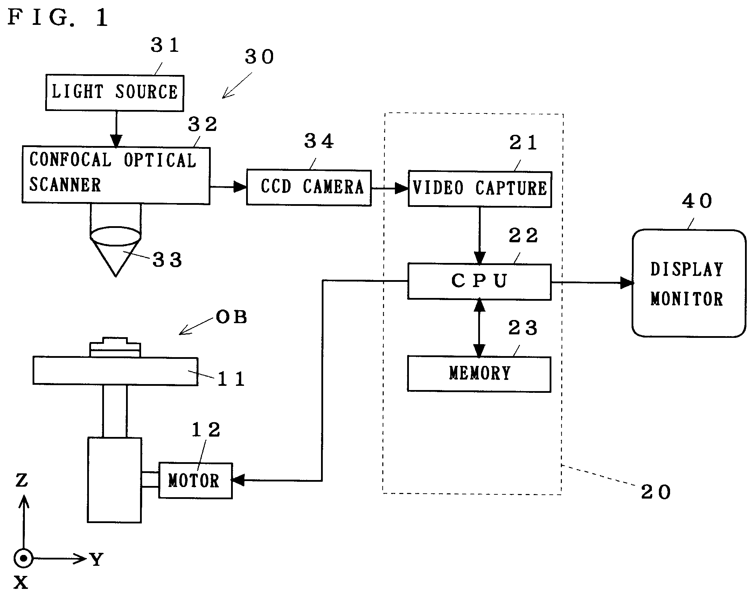

Fig. 1 is a view of a three-dimensional detecting apparatus according to a preferred embodiment of the present invention. In this three-dimensional detecting apparatus, a microscope stage 11 is disposed for free movement in a height direction Z and linked to a motor 12 which is driven in response to a signal obtained from a control part 20 which controls the entire apparatus. Hence, by appropriately controlling the motor 12 after mounting a sample object OB on a top surface of the microscope stage 11, the sample object OB can be positioned at an optional height in the height direction Z. Thus, in this preferred embodiment, the microscope stage 11 and the motor 12 constitute moving means which positions the sample object OB at a plurality of heights which are different from each other in the height direction Z.

Further, a pickup unit 30 for taking a confocal image of the sample object OB is disposed above the microscope stage 11. The pickup unit 30 is comprised of a light source 31 such as a xenon lamp, a confocal optical scanner 32, an objective lens 33, and a CCD camera 34. The pickup unit 30 takes a confocal image at a horizontal plane XY of the sample object OB which is positioned at a predetermined height position in the manner described above, by means of the CCD camera 34, and supplies an analog image signal regarding the confocal image to a video capture 21 of the control part 20.

In the control part 20, the analog image signal supplied to the video capture 21 is converted into a digital signal and supplied to a CPU 22 for a three-dimensional detection process which will be described in detail later. The CPU 22 is connected to the motor 12 through an input/output port not shown. While positioning the sample object OB at heights which are different from each other in the height direction Z by controlling the motor 12, confocal images at the horizontal plane XY at the respective height positions are taken, and based on the plurality of the confocal images, surface information which expresses a surface of the sample object OB and internal information which expresses an internal structure of the sample object OB are obtained by the three-dimensional detection process which will be described later. Thus, in this preferred embodiment, the control part 20 functions as peak position detecting means and surface information determining means for determining the surface information regarding the sample object OB. Further, the CPU 22 is also connected to a display monitor 40 through the input/output port, so that a surface shape or a cross-sectional shape of the sample object OB is displayed on the display monitor 40 based on the obtained surface information or the internal information. In Fig. 1, denoted at 23 is a memory for temporarily storing image data, a program for executing the three-dimensional detection process which will be described later, etc.

Although the pickup unit 30 is fixed and the microscope stage 11 is moved in the height direction Z in this preferred embodiment, the microscope stage 11 may be fixed and the pickup unit 30 or the objective lens 33 may be moved in the height direction Z, in which case as well it is possible to take the plurality of the confocal images of the sample object OB at different heights.

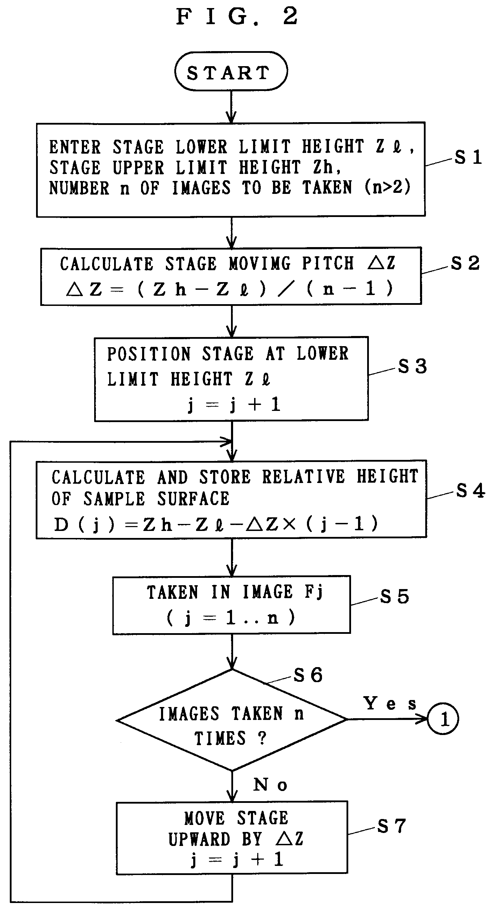

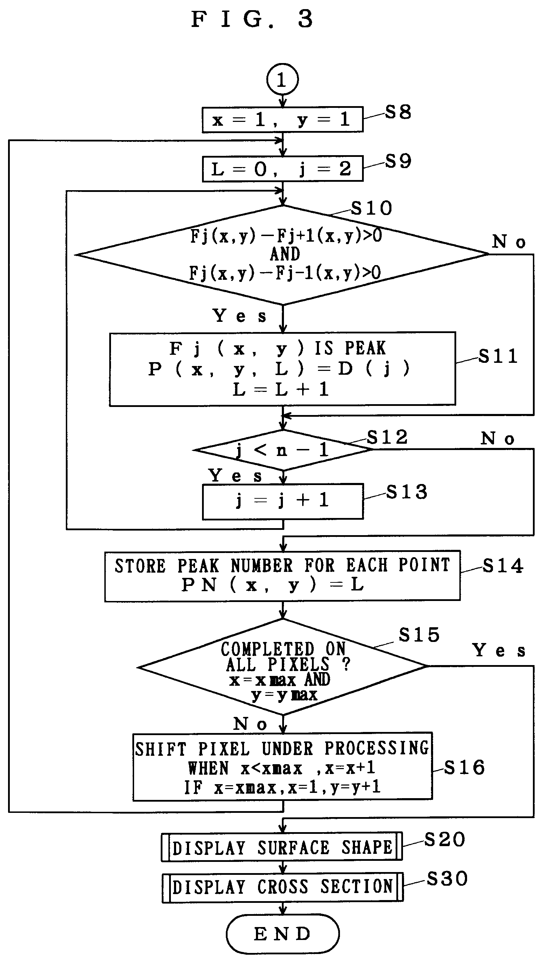

Figs. 2 and 3 are flow charts showing an operation of the three-dimensional detecting apparatus which is constructed as described above.

First, an operator enters a lower limit height Zl and a upper limit height Zh of the stage and the number n of image-to-be-taken (n>2), through a key board (not shown) which is disposed to the control part 20 (Step S1). As herein termed, "the number n of image-to-be-taken" is a value which denotes at which step the microscope stage 11 is positioned when confocal images of the sample object OB are taken at the respective heights.

The value which is obtained at Step S1 is substituted in the following formula:

$$\Delta Z = (Zh - Zl) / (n - 1)$$

whereby a stage moving pitch $\Delta Z$ is calculated and stored in the memory 23 (Step S2).

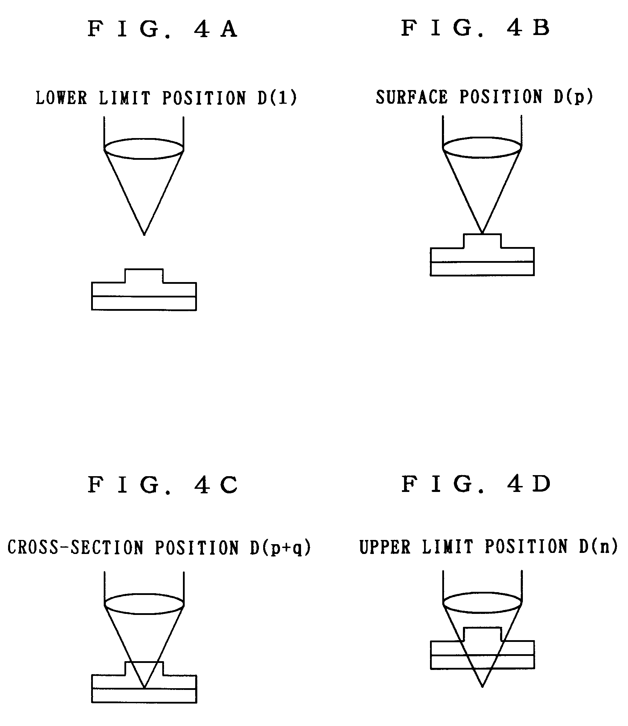

Following this, a drive instruction signal is supplied to the motor 12 from the control part 20 so that the microscope stage 11 is positioned at the lower limit height Zl (i.e., height position D(1)) (See Fig. 4A), while a count j is initialized to "1" (Step S3). The count j is related to the height position of the microscope stage 11, and is an integer from "1" and "n."

Next, while positioning the microscope stage 11 at heights which are different from each other within the range between the lower limit height Zl and the upper limit height Zh by executing Step S4 to Step S7 n times, confocal images Fj at the horizontal plane XY at the respective height positions are taken and stored in the memory 23. That is, a relative height position D(j) of the sample object OB is calculated at Step S4, from the following formula:

$$D(j) = Zh - Zl - \Delta Z \times (j - 1)$$

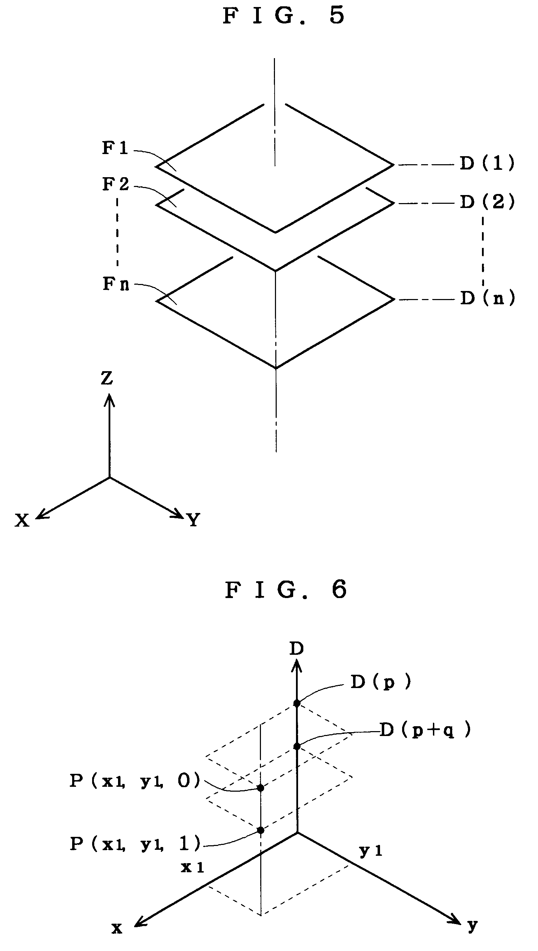

Further, the confocal image Fj at that height position D(j) is taken and stored in the memory 23 at Step S5. This is conceptually illustrated in Fig. 5. For instance, a confocal image F1 is taken and stored in the memory 23 at the lower limit height D(1), a confocal image F2 is taken and stored in the memory 23 at the height D(2), and a confocal image Fn is taken and stored in the memory 23 at the upper limit height D(n). At Step S6, whether images are taken n times is judged. As long as it is judged "NO" at Step S6, the microscope stage 11 is moved upward by the stage moving pitch $\Delta Z$ while incrementing the count j by "1" at Step S7. Conversely, if it is judged "YES" at Step S6, the sequence exits the processing loop from Step S4 to Step S7 and proceeds to Step S8.

At Step S8, counter values x, y, which denote X-coordinate and Y-coordinate of a plurality of pixels which form a confocal image, are initialized to "1," "1."

At Step S9, a count L is initialized to "0" while the count j is initialized to "2." As herein termed, the count L is a value which indicates whether a local maximum peak of the quantity of light (i.e., light-intensity level) at a pixel (x, y) is related to a surface of the sample object OB or to an internal structure of the sample object OB. A local maximum peak with L=0 denotes the surface of the sample object OB, while a local maximum peak with $L \geq 1$ denotes the internal structure of the sample object OB. The reason of this will be described in detail later.

Following this, at Step S10, whether the relationship of inequities below are satisfied is judged:

$$F_j (x, y) - F_{j+1} (x, y) > 0 \text{ and}$$

$$F_j (x, y) - F_{j-1} (x, y) > 0$$

In other words, the quantities of light of confocal images $F_{j-1}$, $F_j$, and $F_{j+1}$ at the pixel (x, y) are compared with each other, and if there is a local maximum peak of the quantity of light exists for the count j (i.e., height position D(j)) is determined.

When it is judged "YES" at Step S10, the confocal image Fj is a local maximum peak with respect to the pixel (x, y). Therefore, the height position D(j) corresponding to this is determined as a peak height position P (x, y, L) and stored in the memory 23, the count L is incremented by "1" (Step S11), and the sequence proceeds to Step S12. On the other hand, when it is judged "NO" at Step S10, the sequence proceeds directly to Step S12 without executing Step S11.

At Step S12, whether the count j is smaller than a value (n-1) is judged. When it is judged "YES" at Step S12, the count j is incremented by "1" at Step S13 and the sequence returns to Step S10. An operation where this processing loop (Step S10 to Step S13) is repeated until it is judged "NO" at Step S12 will be described with reference to Figs. 4A to 4D and 6, while citing a specific model.

A description will be given on a case where there is an interface between layers within the sample object OB, as shown in Figs. 4A to 4D. As such an sample object OB is gradually moved upward by the stage moving pitch $\Delta Z$ from the lower limit height Zl, a surface of the sample object OB which corresponds to a pixel (x1, y1) at a height position D(p) is positioned at a focal position (Fig. 4B), and the quantity of light at the pixel (x1, y1) at the height position D(p) becomes larger than the quantities of light at the height position D(p-1) immediately below and the height position D(p+1) immediately above, whereby it is judged "YES" at Step S10. Now, the symbol p satisfies 2<p<n. Hence, at Step S11, the height position D(p) is supplied as the peak height position P (x1, y1, 0). As the microscope stage 11 is moved further upward, as shown in Fig. 4C, at a height position D(p+q), the layer interface formed within the sample object OB is positioned at the focal position, so that for the pixel (x1, y1), the quantity of light at the height position D(p+q) becomes larger than the quantities of light at the height position D(p+q-1) immediately below and the height position D(p+q+1) immediately above, whereby it is judged "YES" at Step S10 and the height position D(p+q) is supplied as the peak height position P (x1, y1, 1) at Step S11. Thus, in this preferred embodiment, since a peak height position at which the quantity of light becomes local maximum is found while gradually moving the sample object OB upward, the peak height position P (x1, y1, 0) which appears first denotes the height position of the surface of the sample object OB. Hence, even if there are a plurality of peak height positions (x1, y1, 0) and (x1, y1, 1) for the pixel (x1, y1) as described above, it is possible to accurately and easily identify the peak height position P (x1, y1, 0) which corresponds to the surface of the sample object OB. The other the peak height position P (x1, y1, 1) is related to the internal structure of the sample object OB, i.e., the layer interface in this specific model.

Now, referring back to Fig. 3, when it is judged "NO" at Step S12, that is, when detection of a local maximum peak of the light quantity for the pixel (x, y) is completed, the sequence exits the processing loop from Step S10 to Step S13 and Step S14 is executed.

At Step S14, a final value of the count L is supplied to the number of peaks PN(x, y) regarding the pixel (x, y).

At Step S15, whether x = xmax and y = ymax are both satisfied, that is, whether the processing from Step S9 to Step S14 (i.e., judgement of peak process) described above is completed on all pixels (x, y) is judged. As far as it is judged "NO" at Step S15, the judgement of peak process is repeated after appropriately setting coordinate values x, y at Step S16 and thereby shifting a pixel which is under processing. In this manner, the peak height position P (x, y, 0) which expresses the position of the surface of the sample object OB and the peak height positions P (x, y, 1), (x, y, 2), ... which express the internal structure are obtained, with respect to every pixel (x, y).

As described above, confocal images F1, F2, ... Fn at the horizontal plane XY at the plurality of the height positions D(j) which are different from each other in the height direction Z are taken while moving the sample object OB in the height direction Z. Based on the confocal images F1, F2, ... Fn, the peak height position P(x, y, L) at which the quantity of light becomes local maximum in the height direction Z is calculated for each pixel (x, y). The highest position, i.e., the peak height position P (x, y, 0) is determined as the surface information regarding the sample object OB which corresponds to the pixel (x, y). Hence, even if there are a plurality of local maximum peaks of the light quantity for the pixel (x, y), it is possible to accurately and easily calculate the height position of the surface of the sample object OB, and consequently, to accurately detect the surface shape of the sample object OB. Further, of the peak height positions P(x, y, L) which are calculated in the manner described above, those except for the peak height position P (x, y, 0) which corresponds to the surface information regarding the sample object OB are internal information which is related to the internal structure of the sample object OB. From the internal information, it is possible to grasp a cross-sectional shape of the sample object OB.

By the way, this three-dimensional detecting apparatus not only simply obtains the surface information and the internal information regarding the sample object OB to detect the sample object OB three-dimensionally, but also executes Step S20 and displays the surface shape of the sample object OB on the display monitor 40, and further, executes Step S30 and displays a cross-sectional shape of the sample object OB over the surface shape on the display monitor 40.

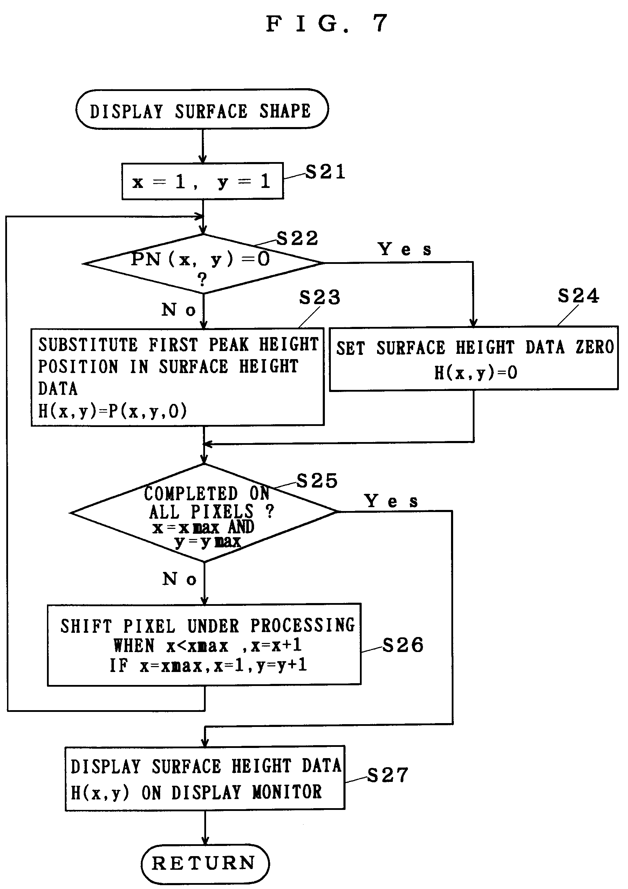

Fig. 7 is a flow chart showing displaying of the surface shape of the sample object. First, the counter values x, y which denote X-coordinate and Y-coordinate of pixels are initialized to "1," "1" at Step S21. Following this, whether the number of peaks PN(x, y) for the pixel (x, y) which is supplied at Step S14 is "0" is judged (Step S22).

When it is judged "NO" at Step S22, that is, if it is judged that the number of peaks PN(x, y) is "1" or larger, the first one of the peak height positions P(x, y, L) which correspond to the pixel (x, y), that is, the peak height position P (x, y, 0) which expresses the surface is supplied to surface height data H(x, y) (Step S23). On the other hand, if it is judged "YES" at Step S22, that is, if it is judged that the number of peaks PN(x, y) is "0," the surface height data H(x, y) are set as "0" (Step S24).

Following this, at Step S25, whether the processing from Step S22 to Step S24 (i.e., setting of surface height process) is completed on all pixels is judged. While the setting of surface height process is not completed on all pixels, the setting of surface height process from Step S22 to Step S24 is executed while appropriately shifting the pixel under processing (Step S26).

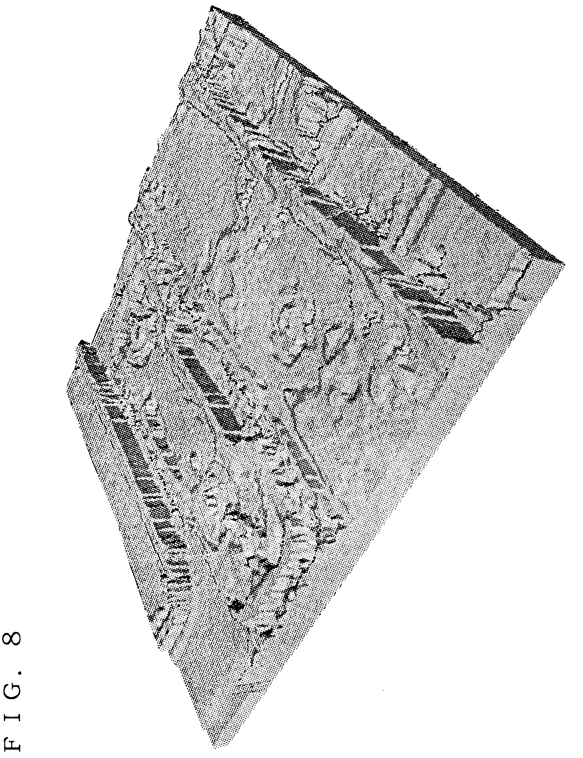

When it is judged at Step S25 that the setting of surface height process is completed on all pixels, based on the surface height data H(x, y) which are obtained in the manner described above, marks expressing the surface of the sample object are put on in correspondence to the respective pixels, whereby the surface shape of the sample object OB is displayed on the display monitor 40. Fig. 8 shows an example of the surface shape which is drawn on the display monitor 40.

Thus, in this preferred embodiment, not only the surface information regarding the sample object OB, i.e., the peak height position P (x, y, 0) is simply calculated to perform the three-dimensional detection on the sample object OB, but also the surface shape of the sample object OB is displayed on the display monitor 40 based on the calculated surface information. Therefore, an operator or the like can visually and easily grasp the surface shape of the sample object OB.

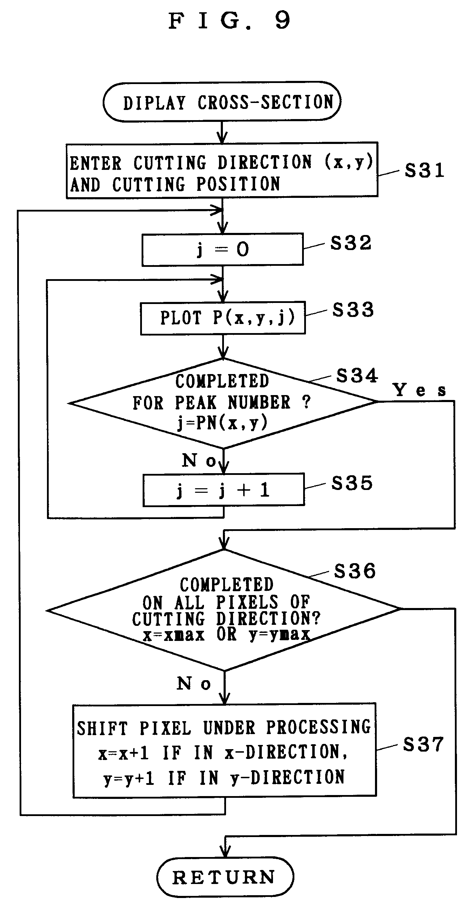

Fig. 9 is a flow chart showing displaying of a cross-sectional shape of the sample object. First, to designate a cross-section which is to be displayed, an operator enters a cutting direction (x, y) and a cutting position through the key board (not shown) at Step S31.

Next, the count j is initialized to "0" at Step S32.

At Step S33, an appropriate mark is plotted on the display monitor 40, in correspondence to a peak height position P(x, y, j). When j=0, the peak height position P(x, y, j) is P(x, y, 0), and therefore, the plotted mark on the display monitor 40 indicates the surface of the sample object OB. On the other hand, when j>0, the peak height position P(x, y, j) is internal information which is related to the internal structure of the sample object OB, and therefore, the corresponding plotted mark on the display monitor 40 indicates the cross-section of the sample object OB.

By judging whether the count j coincides with the number of peaks PN(x, y) at Step S34, whether plotting of the mark on the display monitor 40 in correspondence to all peak height positions P(x, y, j) with respect to the pixel (x, y) is judged. If it is judged "NO" at Step S34, the count j is incremented by "1" at Step S35 and the sequence returns to Step S33. By repeating this, the surface and the cross-section of the sample object OB which corresponds to the pixel (x,y) are displayed.

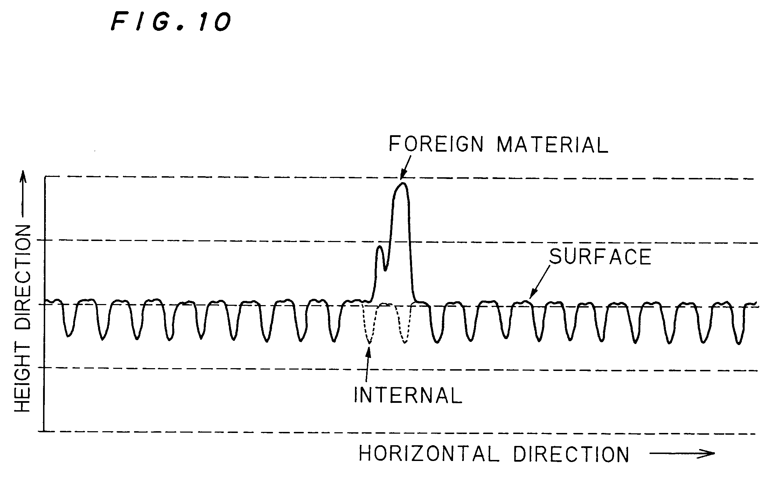

Conversely, if it is judged "YES" at Step S34, the sequence proceeds to Step S36 to judge whether the processing from Step S32 to Step S35 (i.e., cross-section displaying process) is completed on all pixels of the cutting direction. If it is judged "NO" at Step S36, the sequence returns to Step S32 to repeat a surface/cross-section plotting process (i.e., Step S32 to Step S35) so that a cross-section as that shown in Fig. 10 of the sample object OB taken in the cutting direction is displayed. On the other hand, if it is judged "YES" at Step S36, indicating that displaying of the cross-section of the sample object OB taken in the cutting direction is completed, the cross-section displaying process is ended. Fig. 10 shows an example of the cross-sectional shape which is drawn on the display monitor 40 in this manner, as a reference example.

Thus, in this preferred embodiment, not only the surface information and the internal information regarding the sample object OB, i.e., the peak height positions P (x, y, L) are calculated to perform the three-dimensional detection on the sample object OB, but also a cross-sectional shape related to the internal structure of the sample object OB is displayed on the display monitor 40 based on the calculated surface and the internal information. Therefore, an operator or the like can visually and easily grasp the surface shape of the sample object OB. Further, from the cross-sectional shape which is displayed on the display monitor 40, it is possible to easily understand a layer structure inside the sample object and to easily find a defect such as a foreign material.

While the preferred embodiment above requires to take the confocal images F1, F2, ... Fn at the respective height positions D(j) and store the same in the memory 23, if the number n of images to be taken is increased to enhance the resolution, a necessary memory capacity is proportionally increased and a cost for the three-dimensional detecting apparatus is accordingly increased. On the other hand, although it is possible to suppress the memory capacity if the confocal images F1, F2, ... Fn are recorded on a magnetic disk and properly read, reading takes time and a total processing time becomes longer. Such a problem can be solved if local maximum peaks are sequentially detected while taking confocal images and storing the peak height positions P (x, y, L) in the memory 23. In the following, a three-dimensional detecting apparatus according to such a preferred embodiment will be described.

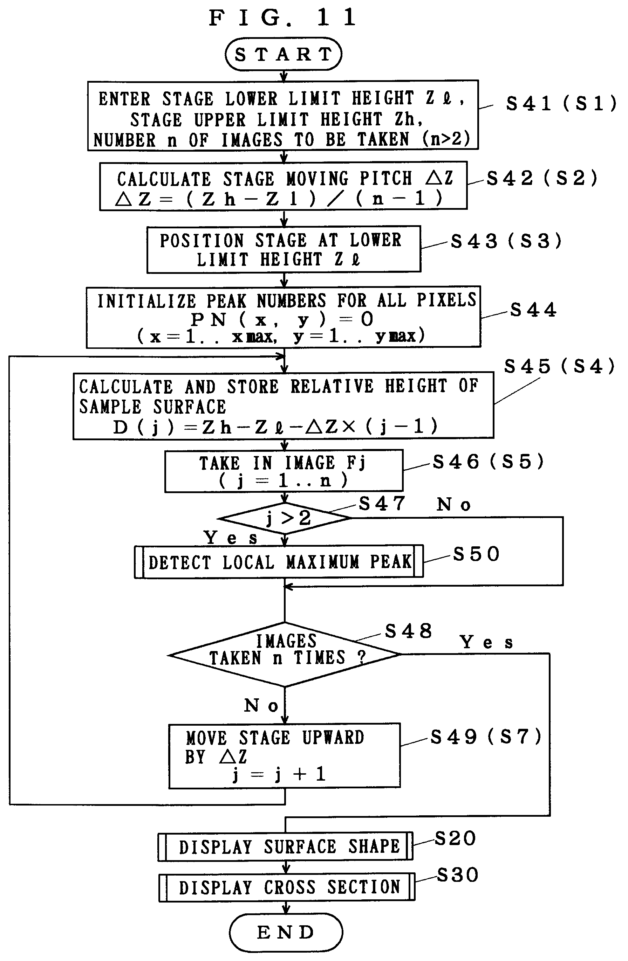

Fig. 11 is a flow chart showing an operation of a three-dimensional detecting apparatus according to another preferred embodiment of the present invention. As the structure of the three-dimensional detecting apparatus according to this preferred embodiment is identical to that of the apparatus described above, a redundant description on the structure will be omitted. Rather, a description will be given on a three-dimensional detection process, the surface shape displaying process and the cross-sectional shape displaying process.

In this preferred embodiment, processing which is similar to that from Step S1 to Step S3 of the previous preferred embodiment is carried out. That is, after entering the lower limit height Zl, the upper limit height Zh and the number n of images to be taken (n>2) through a key board (not shown) which is disposed to the control part 20 (Step S41), an operator calculates the stage moving pitch ΔZ and stores the same in the memory (Step S42). Following this, the drive instruction signal is supplied to the motor 12 from the control part 20 so that the microscope stage 11 is positioned at the lower limit height Zl (See Fig. 4A) and the count j is initialized to "1" (Step S43).

Next, with respect to all pixels, the number of peaks PN(x, y) are initialized to "0" at Step S44.

Following this, after the relative height position D(j) of the sample object OB is calculated in a manner similar to that at Step S4, Step S5 of the previous preferred embodiment, in accordance with the following (Step S45),

$$D(j) = Zh - Zl - \Delta Z \times (j - 1)$$

the confocal image Fj at the height position D(j) is taken and stored in the memory 23 (Step S46).

At Step S47, whether the count j is larger than "2" is judged. This is because at least three confocal images are necessary to detect a local maximum peak of the quantity of light. While the count j is judged "1" or "2" at Step S47, confocal images F1, F2 are taken without a local maximum peak detection process (Step S50).

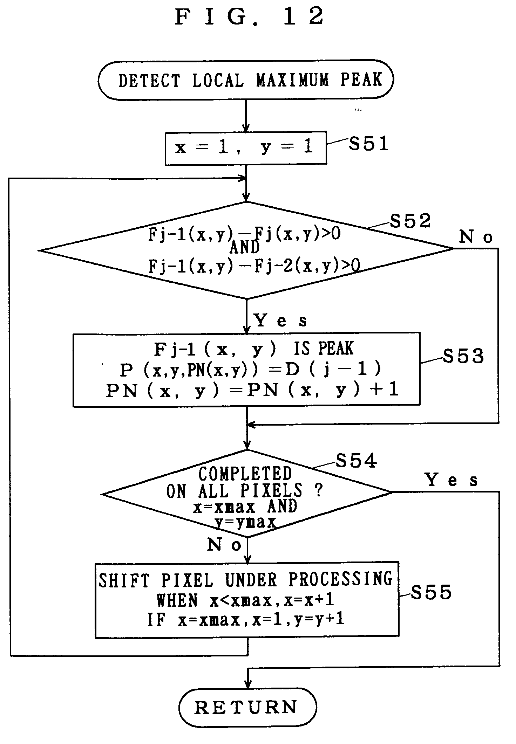

On the other hand, if it is judged "YES" at Step S47, indicating that the count j is 3 or larger, the local maximum peak detection process is executed (Step S50). The contents of the detection process will be described with reference to Fig. 12.

Fig. 12 is a flow chart showing the local maximum peak detection process. First, the counter values x, y, which respectively denote X-coordinate and Y-coordinate of pixels which form a confocal image are initialized to "1," "1" at Step S51.

At Step S52, whether the following inequities are satisfied is judged:

$$Fj-1(x, y) - Fj(x, y) > 0 \text{ and}$$

$$Fj-1(x, y) - Fj-2(x, y) > 0$$

That is, the quantities of light of confocal images Fj-2, Fj-1, and Fj at the pixel (x, y) are compared with each other, and if there is a local maximum peak of the quantity of light exists for the count j-1 (i.e., height position D(j-1)) is determined.

When it is judged "YES" at Step S52, the confocal image Fj-1 is a local maximum peak with respect to the pixel (x, y). Therefore, the height position D(j-1) corresponding to this is determined as a peak height position P (x, y, PN(x, y)) and stored in the memory 23, the number of peak PN(x, y) is incremented by "1" (Step S53), and the sequence proceeds to Step S54. On the other hand, when it is judged "NO" at Step S52, the sequence proceeds directly to Step S54 without executing Step S53.

At Step S54, whether x = xmax and y = ymax are both satisfied, that is, whether the processing from Step S52, Step S53 (i.e., judgement of peak process) described above is completed on all pixels (x, y) is judged. As far as it is judged "NO" at Step S54, the judgement of peak process (Step S52, Step S53) is repeated after appropriately setting counter values x, y at Step S55 and thereby shifting a pixel which is under processing. In this manner, when three confocal images are obtained, the peak height position P (x, y, 0) which expresses the position of the surface of the sample object OB and the peak height positions P (x, y, 1), (x, y, 2), ... which express the internal structure are calculated based on the obtained three confocal images.

When it is judged "YES" at Step S54 and the judgement of peak process is completed on all pixels (x, y), the sequence proceeds to Step S48 of Fig. 11.

Now, referring back to Fig. 11, at Step S48, whether images are taken for n times is judged. As far as it is judged "NO" at Step S48, the processing from Step S45 to Step S48 and Step S50 is repeated after moving the microscope stage 11 upward by the stage moving pitch $\Delta Z$ while incrementing the count j by "1." Conversely, when it is judged "YES" at Step S48, the sequence exits the processing loop from Step S45 to Step S50, and the surface shape of the sample object OB is displayed at Step S20 while the cross-sectional shape of the sample object OB is displayed at Step S30 as in the previous preferred embodiment.

As described above, in this preferred embodiment, while moving the sample object OB in the height direction Z, confocal images F1, F2 at the horizontal plane XY at the plurality of the height positions D(j) which are different from each other in the height direction Z are taken, and when the successive three confocal images are obtained, the peak height positions P (x, y, L) which serve as the surface information and the internal information are calculated. Hence, confocal images to be stored in the memory 23 are limited to three images, which suppresses the memory capacity. Of course, it is possible to perform the three-dimensional detection in a short time since it is not necessary to record data on a magnetic disk.

While the invention has been described in detail, the foregoing description is in all aspects illustrative and not restrictive. It is understood that numerous other modifications and variations can be devised without departing from the scope of the invention.

The features disclosed in the foregoing description, in the claims and/or in the accompanying drawings may, both, separately and in any combination thereof, be material for realising the invention in diverse forms thereof.

## Claims

1. An apparatus for detecting a three-dimensional shape of a sample, comprising:

   a) pickup means for taking respective confocal images at different heights from said sample to obtain light-intensity levels in said respective confocal images for each pixel;
   b) peak position detecting means for detecting respective peak positions where said light-intensity level of each pixel is local maximum among said different heights for each pixel;
   c) selecting means for selecting one of said peak positions for each pixel to obtain a spacial distribution of characteristic heights; and
   d) determining means for determining a three dimensional shape of said sample from said spacial distribution of characteristic heights.

2. The apparatus of claim 1, wherein said peak position detecting means comprises

b-1) comparing means for comparing said light-intensity level of each pixel with respective light-intensity levels of corresponding pixels in nearest up-side height and down-side height to determine a local maximum light-intensity level of each pixel; and

b-2) defining means for defining each of said peak positions by said local maximum light-intensity level of each pixel.

3. The apparatus of claim 2, wherein said selecting means comprises

c-1) means for selecting highest one of said peak positions for each pixel to obtain a first spacial distribution of characteristic heights; and

d-1) means for determining a surface-shape of said sample from first spacial distribution of characteristic heights.

4. The apparatus of claim 3, further comprising:

e) display means for displaying said surface-shape of said sample.

5. The apparatus of claim 2, wherein said selecting means comprises

c-2) means for selecting one of said peak positions except highest for each pixel to obtain a second spacial distribution of characteristic heights; and

d-2) means for determining a cross sectional form of said sample from second spacial distribution of characteristic heights.

6. The apparatus of claim 5, further comprising:

e) display means for displaying said cross sectional form of said sample.

7. A method of detecting a three-dimensional shape of a sample, comprising the steps of:

a) taking respective confocal images at different heights from said sample to obtain light-intensity levels in said respective confocal images for each pixel;

b) detecting respective peak positions where said light-intensity level of each pixel is local maximum among said different heights for each pixel;

c) selecting one of said peak positions for each pixel to obtain a spacial distribution of characteristic heights; and

d) determining a three dimensional shape of said sample from said spacial distribution of characteristic heights.

8. The method of claim 7, wherein the step b) comprises the steps of:

b-1) comparing said light-intensity level of each pixel with respective light-intensity levels of corresponding pixels in nearest up-side height and down-side height to determine a local maximum light-intensity level of each pixel; and

b-2) defining each of said peak positions by said local maximum light-intensity level of each pixel.

9. The method of claim 7, wherein the step c) comprises the step of:

c-1) selecting highest one of said peak positions for each pixel to obtain a first spacial distribution of characteristic heights; and

d-1) determining a surface-shape of said sample from first spacial distribution of characteristic heights.

10. The method of claim 9, further comprising the steps of:

e) displaying said surface-shape of said sample on display means.

11. The method of claim 7, wherein the step c) comprises the step of:

c-2) selecting one of said peak positions except highest for each pixel to obtain a second spacial distribution of characteristic heights; and

d-2) determining a cross sectional form of said sample from second spacial distribution of characteristic heights.

12. The method of claim 11, further comprising the steps of:

e) displaying said cross sectional form of said sample on display means.

13. The method according to claim 7 comprising the further steps of:

shifting said different heights and repeating the steps a) through b) to obtain a plurality of peak positions for each pixel before selecting one of said plurality of peak positions for each pixel to obtain the spacial distribution of characteristic

heights.

FIG. 1

# F I G. 2

```
        ┌─────────────┐
        │   START     │
        └─────────────┘
               │
               ▼
```

ENTER STAGE LOWER LIMIT HEIGHT Z ℓ ,
STAGE UPPER LIMIT HEIGHT Zh,
NUMBER n OF IMAGES TO BE TAKEN (n>2) ── S 1

CALCULATE STAGE MOVIMG PITCH $\triangle Z$ ── S 2
$\triangle Z = ( Z h - Z \ell ) / ( n - 1 )$

POSITION STAGE AT LOWER
LIMIT HEIGHT Z ℓ ── S 3
$j = j + 1$

CALCULATE AND STORE RELATIVE HEIGHT
OF SAMPLE SURFACE ── S 4
$D ( j ) = Z h - Z \ell - \triangle Z \times ( j - 1 )$

TAKEN IN IMAGE Fj ── S 5
$( j = 1 .. n )$

IMAGES TAKEN n TIMES ? ── S 6   Yes → (1)

No

MOVE STAGE
UPWARD BY $\triangle Z$ ── S 7
$j = j + 1$

11

# FIG. 3

```
        ( 1 )
          ↓
   ┌──────────────┐
   │ x = 1, y = 1 │──── S8
   └──────────────┘
          ↓
   ┌──────────────┐
   │ L = 0, j = 2 │──── S9
   └──────────────┘
          ↓
```

S10

$F_j(x,y) - F_{j+1}(x,y) > 0$
AND
$F_j(x,y) - F_{j-1}(x,y) > 0$ ──── No

Yes

S11

$F_j(x, y)$ IS PEAK
$P(x, y, L) = D(j)$
$L = L + 1$

$j < n - 1$ ──── S12    No

Yes

$j = j + 1$ ──── S13

STORE PEAK NUMBER FOR EACH POINT
$PN(x, y) = L$ ──── S14

COMPLETED ON
ALL PIXELS ?
$x = x\,max$ AND
$y = y\,max$ ──── S15    Yes

No

SHIFT PIXEL UNDER PROCESSING
WHEN $x < x\,max$, $x = x+1$
IF $x = x\,max$, $x = 1$, $y = y+1$ ──── S16

DISPLAY SURFACE SHAPE ──── S20

DISPLAY CROSS SECTION ──── S30

END

FIG. 4A

LOWER LIMIT POSITION D(1)

FIG. 4B

SURFACE POSITION D(p)

FIG. 4C

CROSS-SECTION POSITION D(p+q)

FIG. 4D

UPPER LIMIT POSITION D(n)

# F I G . 5

# F I G . 6

# F I G. 7

```
        ( DISPLAY SURFACE SHAPE )
                    │
                    ▼
            ┌──────────────┐
            │ x = 1, y = 1 │──── S21
            └──────────────┘
                    │
        ┌──────────▼──────────┐
        │                     │
        │        S22          │        Y e s
        └◇  PN(x, y)=0  ◇──────────────────┐
              ?                             │
           N o │                           │
    ┌──────────▼──────────────┐   ┌────────▼────────────────┐
    │ S23                     │   │ S24                     │
    │ SUBSTITUTE FIRST PEAK   │   │ SET SURFACE HEIGHT      │
    │ HEIGHT POSITION IN      │   │ DATA ZERO               │
    │ SURFACE HEIGHT DATA     │   │ H(x,y)=0                │
    │ H(x,y)=P(x,y,0)         │   │                         │
    └──────────┬──────────────┘   └────────┬────────────────┘
               │                           │
               └──────────┬────────────────┘
                          ▼
                 ◇  COMPLETED ON  ◇    S25      Y e s
                 ◇  ALL PIXELS ?  ◇──────────────────┐
                    x = x max AND                     │
                    y = y max                         │
                      N o │                           │
            ┌─────────────▼──────────────┐            │
            │ SHIFT PIXEL UNDER          │            │
            │ PROCESSING                 │──── S26    │
            │ WHEN x<xmax ,x=x+1         │            │
            │ IF x=xmax,x=1,y=y+1        │            │
            └─────────────┬──────────────┘            │
                          │                           │
                          └──────────┬────────────────┘
                                     ▼
                        ┌──────────────────────────┐
                        │ DISPLAY SURFACE HEIGHT   │
                        │ DATA                     │──── S27
                        │ H(x,y) ON DISPLAY MONITOR│
                        └──────────┬───────────────┘
                                   ▼
                            ( RETURN )
```

FIG. 8

# F I G . 9

```
      ( DIPLAY CROSS-SECTION )
                 │
                 ▼
┌─────────────────────────────┐
│ ENTER CUTTING DIRECTION (x,y)│── S31
│ AND CUTTING POSITION         │
└─────────────────────────────┘
                 │
                 ▼
        ┌─────────────┐
        │    j = O     │── S32
        └─────────────┘
                 │
                 ▼
        ┌─────────────┐
        │ PLOT P(x,y,j)│── S33
        └─────────────┘
                 │
                 ▼
           ╱ COMPLETED ╲ ── S34
          ╱ FOR PEAK NUMBER ? ╲      Y e s
          ╲   j=PN(x,y)   ╱
           ╲           ╱
              N o │
                  ▼
        ┌─────────────┐
        │  j = j + 1   │── S35
        └─────────────┘
                 │
                 ▼
           ╱ COMPLETED ╲ ── S36
          ╱ ON ALL PIXELS OF ╲
          ╲ CUTTING DIRECTION? ╱
           ╲ x=xmax OR y=ymax ╱

              N o │
                  ▼
┌─────────────────────────────┐
│ SHIFT PIXEL UNDER PROCESSING │
│  x=x+1 IF IN x-DIRECTION,    │── S37
│  y=y+1 IF IN y-DIRECTION     │
└─────────────────────────────┘
                 │
                 ▼
          ( RETURN )
```

FIG. 10

# FIG. 11

START

ENTER STAGE LOWER LIMIT HEIGHT Z ℓ,
STAGE UPPER LIMIT HEIGHT Zh,
NUMBER n OF IMAGES TO BE TAKEN (n>2) — S41(S1)

CALCULATE STAGE MOVING PITCH $\triangle Z$
$\triangle Z = (Zh - Z1) / (n-1)$ — S42(S2)

POSITION STAGE AT LOWER
LIMIT HEIGHT Z ℓ — S43(S3)

INITIALIZE PEAK NUMBERS FOR ALL PIXELS
$PN(x, y) = 0$
$(x = 1..xmax, y = 1..ymax)$ — S44

CALCULATE AND STORE RELATIVE HEIGHT OF
SAMPLE SURFACE
$D(j) = Zh - Z ℓ - \triangle Z \times (j-1)$ — S45(S4)

TAKE IN IMAGE Fj
$(j = 1..n)$ — S46(S5)

$j > 2$ — S47    No

Yes

DETECT LOCAL MAXIMUM PEAK — S50

IMAGES
TAKEN n TIMES ? — S48    Yes

No

MOVE STAGE UPWARD
BY $\triangle Z$
$j = j + 1$ — S49(S7)

DISPLAY SURFACE SHAPE — S20

DISPLAY CROSS SECTION — S30

END

EP 0 768 622 A2

# FIG. 12

DETECT LOCAL MAXIMUM PEAK

x = 1, y = 1 — S51

S52

$F_{j-1}(x,y) - F_j(x,y) > 0$
AND
$F_{j-1}(x,y) - F_{j-2}(x,y) > 0$

No

Yes

$F_{j-1}(x, y)$ IS PEAK
$P(x,y,PN(x,y)) = D(j-1)$
$PN(x, y) = PN(x, y) + 1$

S53

S54
COMPLETED
ON ALL PIXELS ?
x=xmax AND
y=ymax

Yes

No

SHIFT PIXEL UNDER PROCESSING
WHEN x<xmax, x=x+1
IF x=xmax, x=1, y=y+1

S55

RETURN